# EUROPEAN PATENT SPECIFICATION

(11) **EP 3 387 924 B1**
(45) Date of publication and mention of the grant of the patent: **04.09.2019**
(21) Application number: 18165474.0
(22) Date of filing: 03.04.2018
(51) Int. Cl.: A24F 47/00

(54) **ELECTRONIC CIGARETTE**
ELEKTRONISCHE ZIGARETTE
CIGARETTE ÉLECTRONIQUE

(30) Priority: 11.04.2017 TW 106112074
(43) Date of publication of application: 17.10.2018
(73) Proprietor: Microjet Technology Co., Ltd, Hsinchu (TW)
(72) Inventor: CHEN, Shih-Chang, Hsinchu (TW); MO, Li-Pang, Hsinchu (TW); WEN, Chien-Tang, Hsinchu (TW); LIAO, Hung-Hsin, Hsinchu (TW); HUANG, Chi-Feng, Hsinchu (TW); HAN, Yung-Lung, Hsinchu (TW)
(74) Representative: 2K Patentanwälte Blasberg Kewitz & Reichel

(56) References cited:
- EP-A2- 1 369 587
- WO-A1-2015/066121
- WO-A1-2017/011419
- CN-U- 206 629 997
- US-A1- 2017 020 192

## Description

### FIELD OF THE INVENTION

The present invention relates to an electronic cigarette, and more particularly to an electronic cigarette with a fluid transportation device.

### BACKGROUND OF THE INVENTION

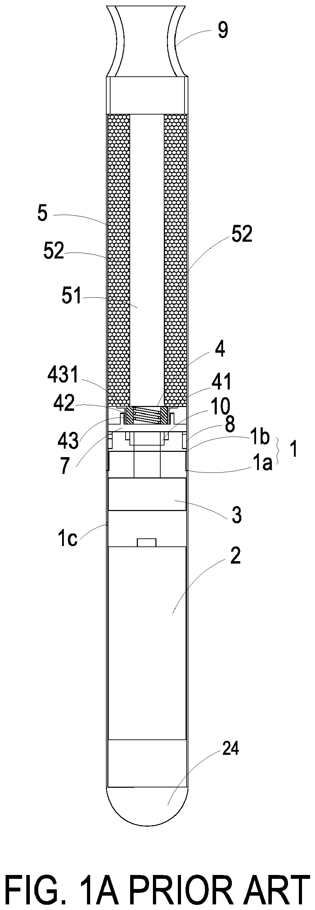

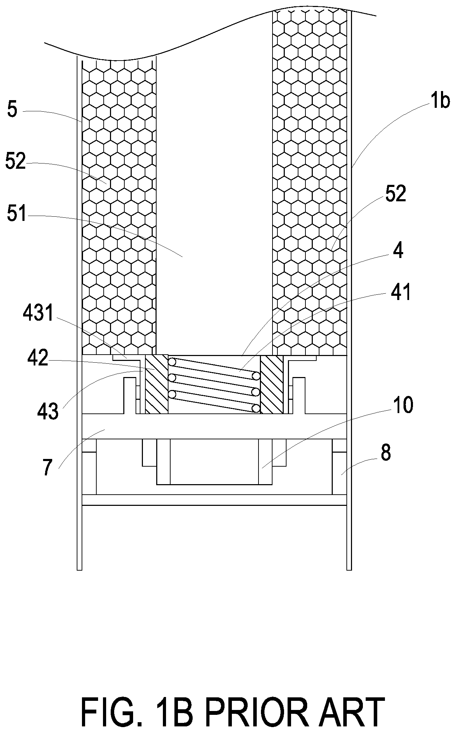

Nowadays, electronic cigarettes are widely used to replace the conventional tobacco cigarettes. FIG. 1A is a schematic cross-sectional view illustrating a conventional electronic cigarette. FIG. 1B is a schematic cross-sectional view illustrating the structure of an atomizer of the conventional electronic cigarette. As shown in FIGS. 1A and 1B, the electronic cigarette comprises a first casing 1a, a second casing 1b, a power supply device 2, a sensing unit 3, an atomizer 4 and a liquid storage structure 5. The first casing 1a and the second casing 1b are thin-wall metal pipes, e.g., stainless steel pipes. The power supply device 2, the sensing unit 3, the atomizer 4 and the liquid storage structure 5 are disposed within the first casing 1a and the second casing 1b. After the first casing 1a and the second casing 1b are combined together, the electronic cigarette is assembled. The length and diameter of the electronic cigarette are similar to those of the conventional tobacco cigarette. The power supply device 2 and the sensing unit 3 are disposed within the first casing 1a. The first casing 1a comprises at least one entrance 1c near the sensing unit 3. The atomizer 4 and the liquid storage structure 5 are disposed within the second casing 1b. The atomizer 4 is fixed and supported on a bracket 7. The atomizer 4 comprises an electric heater 41, a liquid absorption part 42 and a liquid transfer part 43. The liquid absorption part 42 is arranged around the electric heater 41. The liquid transfer part 43 is tightly contacted with the liquid absorption part 42. The electric heater 41 has a hollow structure. The liquid storage structure 5 is disposed within the second casing 1b. The liquid storage structure 5 comprises a passageway 51 and a liquid container 52. The passageway 51 is formed within the liquid storage structure 5 for allowing the gas to pass through. The liquid container 52 is arranged around the passageway 51. The liquid transfer part 43 is arranged around the liquid absorption part 42, and a communication part 431 of the liquid transfer part 43 is contacted with the liquid container 52. Consequently, the cigarette liquid in the liquid container 52 could be absorbed by the liquid absorption part 42 through the communication part 431 of the liquid transfer part 43. Moreover, an intake-and-electric-connection element 10 is disposed between the atomizer 4 and the sensing unit 3 to define an airflow path. The airflow path is in communication with the passageway 51 of the liquid storage structure 5. After the ambient airflow is fed into the at least one entrance 1c, the airflow is transferred to the passageway 51 of the liquid storage structure 5 through the sensing unit 3 and the electric heater 41. The electronic cigarette further comprises an electrode ring 8 electrically connected with two pins of the electric heater 41. Moreover, the electrode ring 8 is electrically connected with the power supply device 2 through the electric connection between the intake-and-electric-connection element 10 and the sensing unit 3. An electric circuit of the power supply device 2 is selectively enabled or disabled according to the result of sensing the airflow by the sensing unit 3. Moreover, a mouthpiece 9 is disposed on an end of the second casing 1b and in communication with the passageway 51 of the liquid storage structure 5.

The operations of the electronic cigarette will be described as follows. As mentioned above, the cigarette liquid in the liquid container 52 can be absorbed by the liquid absorption part 42 through the communication part 431 of the liquid transfer part 43. When the user smokes and inhales the air through the mouthpiece 9, the airflow flows through the electronic cigarette. According to the sensing result of the sensing unit 3, the electric circuit of the power supply device 2 is enabled. After the electric circuit of the power supply device 2 is enabled, the power supply device 2 provides electric power to the electrode ring 8. Consequently, the electric heater 41 is enabled to heat the cigarette liquid. Meanwhile, the cigarette liquid in the liquid absorption part 42 is heated and atomized by the electric heater 41. Consequently, the user inhales the atomized vapor from the passageway 51 of the liquid storage structure 5 through the mouthpiece 9. When the user stops smoking, the airflow does not flow through the electronic cigarette. According to the sensing result of the sensing unit 3, the electric circuit of the power supply device 2 is disabled. Meanwhile, the electric heater 41 stops heating the cigarette liquid.

As mentioned above, the cigarette liquid is transferred to the liquid absorption part 42 through the communication part 431 of the liquid transfer part 43. However, this design has some drawbacks. Furthermore, US2017/0020192 A1 discloses an electronic cigarette comprising a pump which delivers a liquid from a reservoir directly to a wick.

Firstly, it is difficult to precisely control the amount of the cigarette liquid to be transferred to the liquid absorption part 42 through the communication part 431 of the liquid transfer part 43. Consequently, the cigarette liquid is not uniformly absorbed by the liquid absorption part 42. In case that a site of the liquid absorption part 42 absorbs a small amount of the cigarette liquid, the liquid drop is not uniformly generated. After the liquid drop of the cigarette liquid is heated by the electric heater 41, the atomized vapor has a burning taste that is unpleasing to the user.

Secondly, since the amount of the cigarette liquid to be transferred to the liquid absorption part 42 cannot be precisely controlled, another problem occurs. Especially when the mouthpiece 9 faces up, the force of gravity continuously transfers the cigarette liquid from the liquid container 52 to the liquid absorption part 42. Once the cigarette liquid absorbed by the liquid absorption part 42 reaches a saturation state, the cigarette liquid drops down to the bracket 7 and the intake-and-electric-connection element 10. Then, the cigarette liquid drops down through the sensing unit 3 and leaks out from the at least one entrance 1c. Meanwhile, a liquid leakage problem occurs.

Moreover, the conventional method of atomizing the cigarette liquid of the electronic cigarette still has some drawbacks. For example, the atomizing efficacy is poor, the droplets of the atomized vapor are larger, the droplets with different sizes generate non-uniformed atomized vapor, the atomized vapor contains excessive moisture, and the taste is poor. In some situations, the atomized vapor which is not sufficiently cooled down and at high temperature causes discomfort. The above problems lead to significant differences between the real cigarette and the electronic cigarette. Because of these drawbacks, the user does not prefer to choose the electronic cigarette in replace of the real cigarette.

For solving the drawbacks of the conventional technologies, the present invention provides an improved electronic cigarette.

### SUMMARY OF THE INVENTION

An object of the present invention provides an electronic cigarette. The cooperation of a fluid transportation device and an atomizer forms a controllable switch element. The amount of the cigarette liquid to be transferred to the liquid absorption part of the atomizer is precisely controlled by the controllable switch element. Consequently, the taste of the atomized vapor is enhanced, and the liquid leakage problem is solved.

In accordance with an aspect of the present invention, there is provided an electronic cigarette. The electronic cigarette includes a power supply device, a sensing unit, an atomizer, a liquid storage structure, a fluid transportation device, a casing and a mouthpiece. The power supply device provides a driving power and a control signal. An electric circuit of the power supply device is selectively enabled or disabled according to a result of detecting an airflow by the sensing unit. The atomizer includes an electric heater, a liquid absorption part and a liquid guiding seat. The liquid absorption part is disposed on the electric heater. A combination of the liquid absorption part and the electric heater is disposed on a middle region of the liquid guiding seat. The liquid guiding seat includes a ring-shaped liquid guiding structure. Moreover, plural perforations are formed in an inner side of the ring-shaped liquid guiding structure. The ring-shaped liquid guiding structure is arranged around the liquid absorption part and contacted with the liquid absorption part. The ring-shaped liquid guiding structure is in communication with the liquid absorption part through the plural perforations. The liquid guiding seat further includes an input port. The input port is in communication with the ring-shaped liquid guiding structure. The liquid storage structure includes a passageway and a liquid container. The passageway allows the airflow to go through and the electric heater is disposed on a first end of the passageway. A cigarette liquid is stored in the liquid container. The fluid transportation device includes an input channel and an output channel. The input channel is in communication with the liquid container. The output channel is in communication with the input port of the liquid guiding seat of the atomizer. The cigarette liquid is transferred from the liquid container to the ring-shaped liquid guiding structure of the liquid guiding seat through the fluid transportation device and transferred to the liquid absorption part through the plural perforations. Consequently, the cigarette liquid is transferred to the electric heater of the atomizer at a certain amount. After the cigarette liquid is heated by the electric heater, an atomized vapor is generated. The power supply device, the sensing unit, the fluid transportation device, the atomizer, the liquid storage structure and an intake-and-electric-connection element are disposed within the casing. The casing has an entrance for the airflow to pass through. After the airflow is fed into the entrance, the airflow passes through the sensing unit and the passageway of the liquid storage structure along an airflow path. The fluid transportation device and the electric heater of the atomizer are electrically connected with the power supply device and the sensing unit through the intake-and-electric-connection element to receive the driving power and the control signal. The mouthpiece seals an end of the casing and in communication with the passageway of the liquid storage structure. The mouthpiece has an opening for inhaling the atomized vapor in the passageway of the liquid storage structure.

The above contents of the present invention will become more readily apparent to those ordinarily skilled in the art after reviewing the following detailed description and accompanying drawings, in which:

### BRIEF DESCRIPTION OF THE DRAWINGS

FIG. 1A is a schematic cross-sectional view illustrating a conventional electronic cigarette;
FIG. 1B is a schematic cross-sectional view illustrating the structure of the atomizer of the conventional electronic cigarette;
FIG. 2A is a schematic cross-sectional view illustrating an electronic cigarette according to an embodiment of the present invention;
FIG. 2B is a schematic cross-sectional view illustrating some components near the power supply device of the electronic cigarette according to the embodiment of the present invention;
FIG. 2C is a schematic cross-sectional view illustrating some components near the atomizer of the electronic cigarette according to the embodiment of the present invention;
FIG. 2D is a schematic top view illustrating the structure of the atomizer of the electronic cigarette according to the embodiment of the present invention;
FIG. 2E is a schematic bottom view illustrating the structure of the atomizer of the electronic cigarette according to the embodiment of the present invention;
FIG. 2F is a schematic cross-sectional view illustrating the structure of the atomizer of the electronic cigarette according to the embodiment of the present invention;
FIG. 3 is a schematic functional block diagram illustrating the power supply device of the electronic cigarette according to the embodiment of the present invention;
FIG. 4 is a schematic perspective view illustrating the fluid transportation device of the electronic cigarette according to the embodiment of the present invention;
FIG. 5A is a schematic exploded view illustrating the fluid transportation device of FIG. 4 and taken along a front side;
FIG. 5B is a schematic exploded view illustrating the fluid transportation device of FIG. 4 and taken along a rear side;
FIG. 6A is a schematic perspective view illustrating the valve body of the fluid transportation device of FIG. 4 and taken along the front side;
FIG. 6B is a schematic perspective view illustrating the valve body of the fluid transportation device of FIG. 4 and taken along the rear side;
FIG. 7A is a schematic perspective view illustrating the valve chamber seat of the fluid transportation device of FIG. 4 and taken along the front side;
FIG. 7B is a schematic perspective view illustrating the valve chamber seat of the fluid transportation device of FIG. 4 and taken along the rear side;
FIG. 8 is a schematic top view illustrating the valve membrane of the fluid transportation device of FIG. 4;
FIG. 9 is a schematic perspective view illustrating the outer sleeve of the fluid transportation device of FIG. 4;
FIG. 10A is a schematic perspective view illustrating the valve cover of the fluid transportation device of FIG. 4 and taken along the front side;
FIG. 10B is a schematic perspective view illustrating the valve cover of the fluid transportation device of FIG. 4 and taken along the rear side;
FIG. 11 is a schematic cross-sectional view illustrating the assembled structure of the fluid transportation device of FIG. 4;
FIG. 12A is a schematic view illustrating the operations of the fluid transportation device in a first situation; and
FIG. 12B is a schematic view illustrating the operations of the fluid transportation device in a second situation.

### DETAILED DESCRIPTION OF THE PREFERRED EMBODIMENT

The present invention will now be described more specifically with reference to the following embodiments. It is to be noted that the following descriptions of preferred embodiments of this invention are presented herein for purpose of illustration and description only. It is not intended to be exhaustive or to be limited to the precise form disclosed.

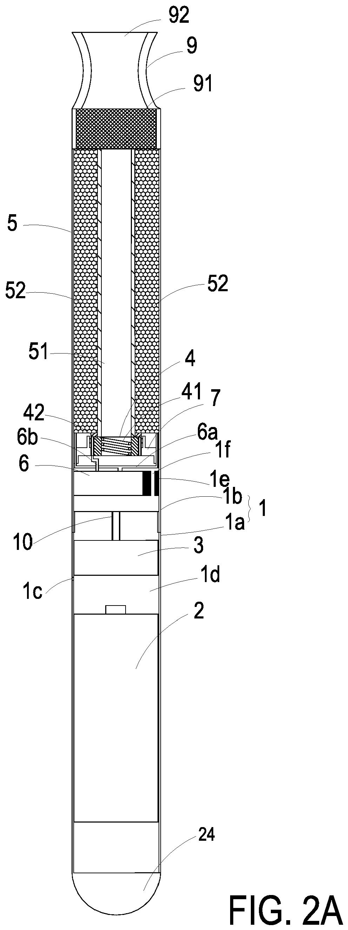

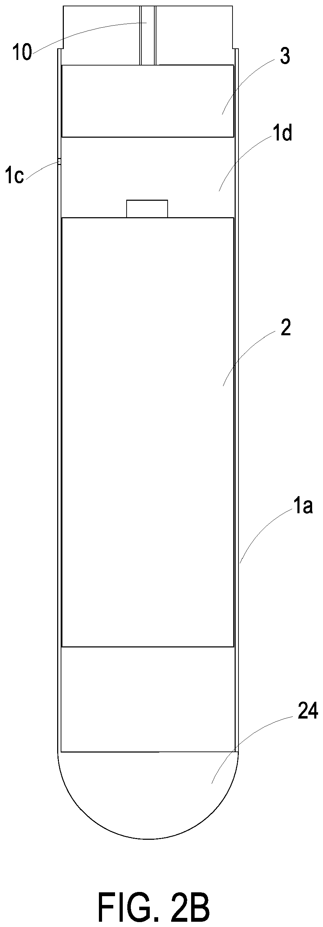

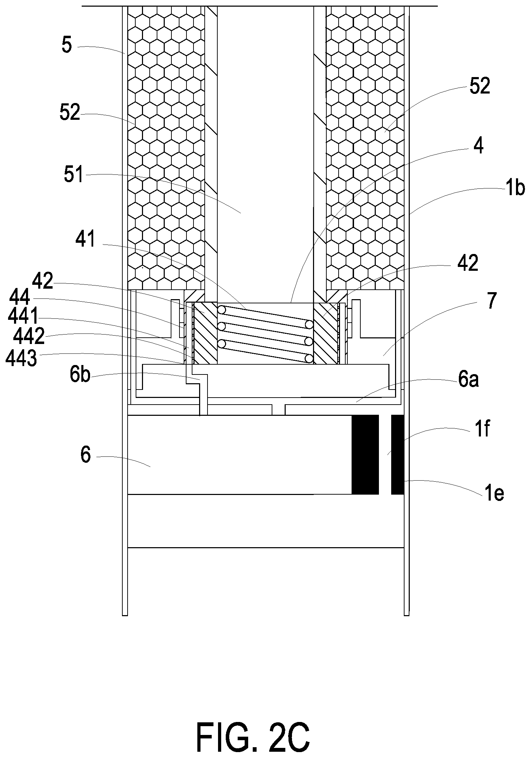

As shown in FIGS. 2A, 2B and 2C, the electronic cigarette of the present invention comprises a casing 1, a power supply device 2, a sensing unit 3, an atomizer 4, a liquid storage structure 5, a fluid transportation device 6 and a mouthpiece 9. The casing 1 is a combination of a first casing 1a and a second casing 1b. The second casing 1b is replaceable. The first casing 1a and the second casing 1b are thin-wall metal pipes, e.g., stainless steel pipes. After the first casing 1a and the second casing 1b are combined together, the electronic cigarette is assembled. The length and diameter of the electronic cigarette are similar to those of the conventional tobacco cigarette. The power supply device 2 and the sensing unit 3 are disposed within the first casing 1a. The first casing 1a comprises at least one entrance 1c near the sensing unit 3.

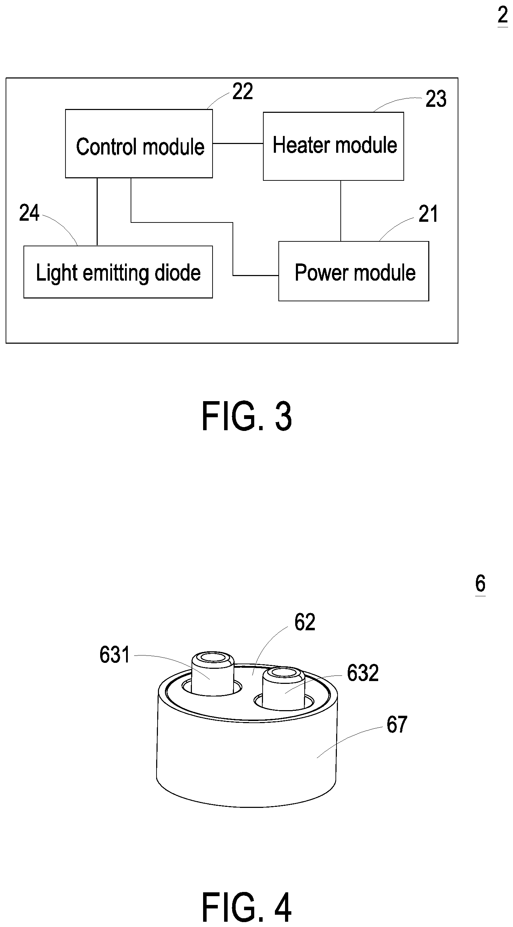

As shown in FIG. 3, the power supply device 2 comprises a power module 21, a control module 22, a heater module 23 and a light emitting diode 24. The power module 21 is a rechargeable battery or a disposable battery for providing a driving power to the control module 22, the heater module 23 and the sensing unit 3. The control module 22 transmits a first control signal to the heater module 23 and a second control signal to the fluid transportation device 6. The control module 22 provides the driving power to the fluid transportation device 6, and the heater module 23 provides electric energy to the atomizer 4 for heating to atomize. The light emitting diode 24 is located at an end of the first casing 1a. Under control of the control module 22, the light emitting diode 24 provides a prompt signal to indicate the operating condition of the electronic cigarette or indicate the intensity of the atomized vapor.

Please refer to FIGS. 2A, 2B and 2C again. The sensing unit 3 is disposed on an end of the power supply device 2, and an air chamber 1d is formed between the sensing unit 3 and the power supply device 2. After the ambient airflow is introduced into the air chamber 1d through the at least one entrance 1c, the airflow passes through the sensing unit 3 along an airflow path. For example, the sensing unit 3 includes an air pressure sensor or an airflow sensor. In an embodiment, the sensing unit 3 is the airflow sensor to transmit a signal to the control module 22. According to the result of detecting the airflow, the electric circuit of the power supply device 2 is selectively enabled or disabled. That is, the driving power and the control signal of the control module 22 and the driving power of the heater module 23 are selectively enabled or disabled. Moreover, an intake-and-electric-connection element 10 is disposed between the atomizer 4 and the sensing unit 3. The power supply device 2 is electrically connected with the atomizer 4 and the fluid transportation device 6 through the intake-and-electric-connection element 10. The intake-and-electric-connection element 10 also provides an airflow channel for the sensing unit 3 to communicate with the second casing 1b.

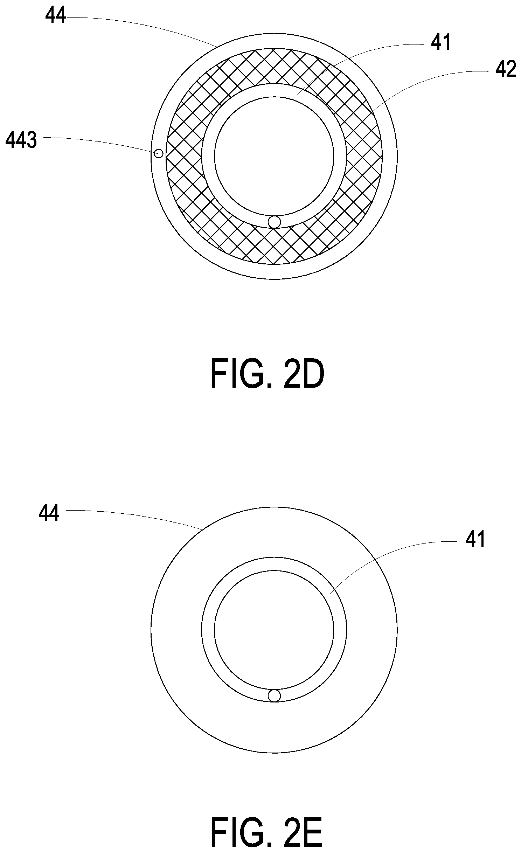

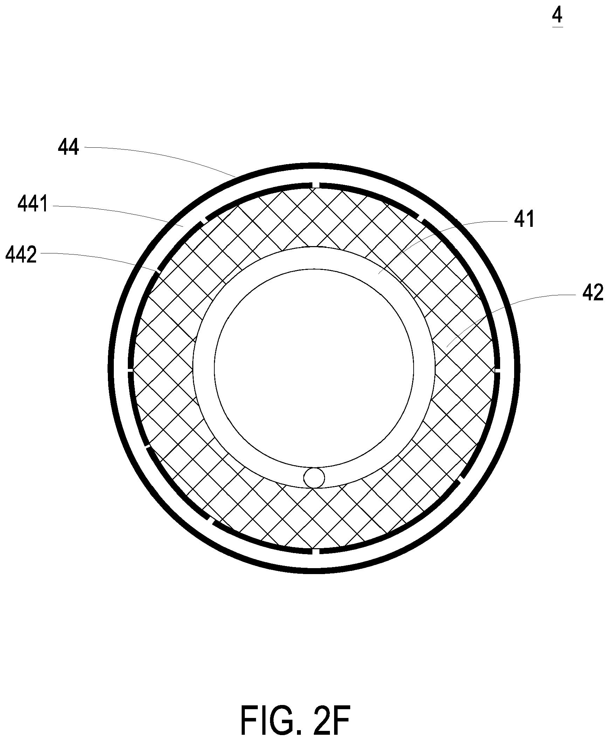

Please refer to FIGS. 2A, 2C, 2D, 2E and 2F. The atomizer 4 is disposed within the second casing 1b. The atomizer 4 is fixed and supported on a bracket 7. The atomizer 4 comprises an electric heater 41, a liquid absorption part 42 and a liquid guiding seat 44. The electric heater 41 has a hollow structure. The two pins (not shown) of the electric heater 41 are electrically connected with the power supply device 2 and the sensing unit 3 through the intake-and-electric-connection element 10. According to the flowing condition of the airflow detected by the sensing unit 3, the electric heater 41 is controlled to start heating or stop heating. The liquid absorption part 42 is used for absorbing the cigarette liquid. For example, the liquid absorption part 42 is made of a foaming material (e.g., a foam structure) or made of a fiber material (e.g., a non-woven fabric). The liquid absorption part 42 is disposed on the electric heater 41. The combination of the liquid absorption part 42 and the electric heater 41 is disposed on a middle region of the liquid guiding seat 44. Moreover, the liquid guiding seat 44 comprises a ring-shaped liquid guiding structure 441. Moreover, plural perforations 442 are formed in an inner side of the ring-shaped liquid guiding structure 441. The ring-shaped liquid guiding structure 441 is arranged around the liquid absorption part 42 and contacted with the liquid absorption part 42. The cigarette liquid could be transferred through the ring-shaped liquid guiding structure 441 to the liquid absorption part 42 through the perforations 442. Moreover, the liquid guiding seat 44 further comprises an input port 443. The input port 443 is in communication with the ring-shaped liquid guiding structure 441.

Please refer to FIGS. 2A and 2C. The liquid storage structure 5 is disposed within the second casing 1b. The liquid storage structure 5 comprises a passageway 51 and a liquid container 52. The passageway 51 is formed within the liquid storage structure 5 for allowing the gas to pass through. The cigarette liquid is stored in the liquid container 52. Moreover, the liquid container 52 is in communication with an input channel 6a of the fluid transportation device 6. In accordance with a feature of the present invention, the fluid transportation device 6 is used as a switch element for selectively allowing the cigarette liquid of the liquid container 52 to pass through. The fluid transportation device 6 is supported and positioned in the second casing 1b through a supporting seat 1e. The supporting seat 1e has a gas channel If. An output channel 6b of the fluid transportation device 6 is in communication with the input port 443 of the liquid guiding seat 44 of the atomizer 4. When the fluid transportation device 6 is enabled, the cigarette liquid is transferred from the liquid container 52 to the ring-shaped liquid guiding structure 441 of the liquid guiding seat 44 through the fluid transportation device 6 and then transferred to the liquid absorption part 42 through the perforations 442. Meanwhile, the cigarette liquid in the liquid absorption part 42 is heated and atomized by the electric heater 41. Moreover, the passageway 51 of the liquid storage structure 5 is in communication with the intake-and-electric-connection element 10 through the gas channel If. After the ambient airflow is fed into the at least one entrance 1c, the airflow is transferred to the passageway 51 of the liquid storage structure 5 through the sensing unit 3 and the electric heater 41 of the atomizer 4.

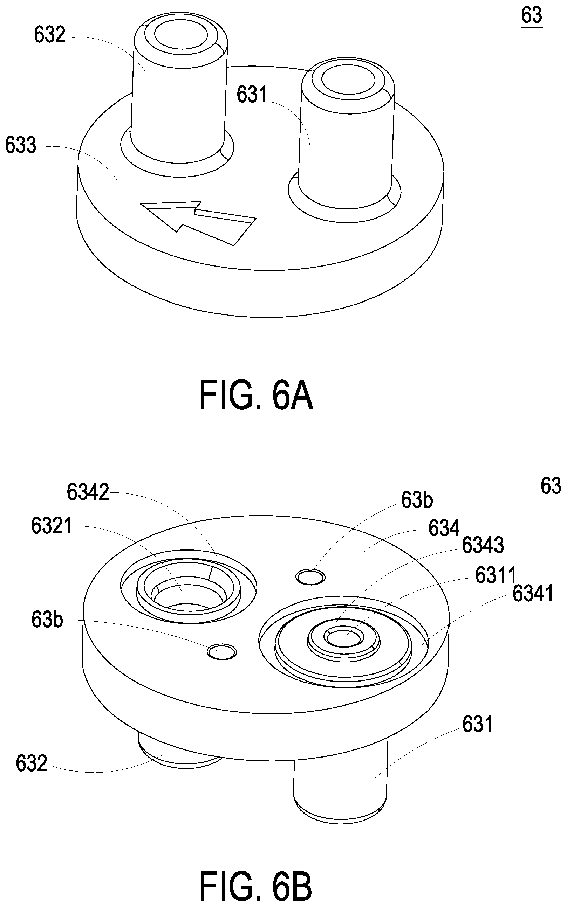

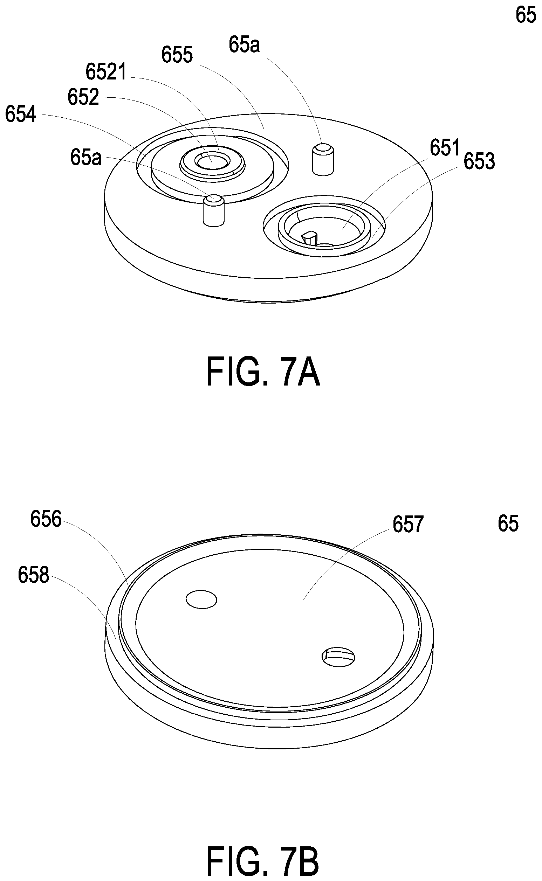

Please refer to FIGS. 4, 5A, 5B, 6A, 6B, 7A and 7B. The fluid transportation device 6 comprises a valve body 63, a valve membrane 64, a valve chamber seat 65, an actuator 66 and an outer sleeve 67. After the valve body 63, the valve membrane 64, the valve chamber seat 65 and the actuator 66 are sequentially stacked on each other, the combination of the valve body 63, the valve membrane 64, the valve chamber seat 65 and the actuator 66 is accommodated within the outer sleeve 67 and assembled with the outer sleeve 67.

The valve body 63 and the valve chamber seat 65 are the main components for guiding the cigarette liquid to be inputted into or outputted from of the fluid transportation device 6. The valve body 63 comprises an inlet passage 631 and an outlet passage 632. The inlet passage 631 and the outlet passage 632 run through a first surface 633 and a second surface 634 of the valve body 63. An inlet opening 6311 is formed in the second surface 634 and in communication with the inlet passage 631. Moreover, a groove 6341 is formed in the second surface 634 and arranged around the inlet opening 6311. A protrusion block 6343 is disposed on the periphery of the inlet opening 6311. An outlet opening 6321 is formed in the second surface 634 and in communication with the outlet passage 632. A groove 6342 is arranged around the outlet opening 6321. Moreover, plural recesses 63b are formed in the second surface 634 of the valve body 63.

The valve chamber seat 65 comprises a third surface 655, a fourth surface 656, plural posts 65a, an inlet valve channel 651, an outlet valve channel 652 and a pressure chamber 657. The plural posts 65a are formed on the third surface 655. The posts 65a are aligned with the corresponding recesses 63b of the valve body 63. When the posts 65a are inserted into the corresponding recesses 63b of the valve body 63, the valve body 63 and the valve chamber seat 65 are fixed together. The inlet valve channel 651 and the outlet valve channel 652 run through the third surface 655 and the fourth surface 656. A groove 653 is formed in the third surface 655 and arranged around the inlet valve channel 651. A protrusion block 6521 is disposed on the periphery of the outlet valve channel 652. A groove 654 is formed in the third surface 655 and arranged around the outlet valve channel 652. The pressure chamber 657 is concavely formed in the fourth surface 656, and in communication with the inlet valve channel 651 and the outlet valve channel 652. Moreover, a concave structure 658 is formed in the fourth surface 656 and arranged around the pressure chamber 657.

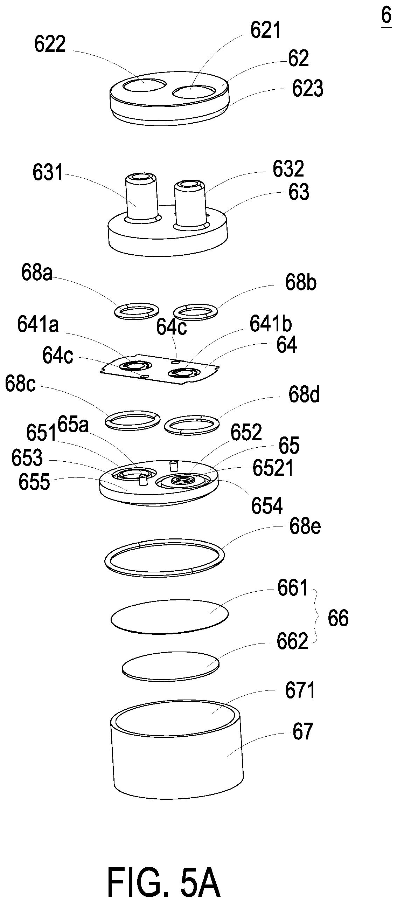

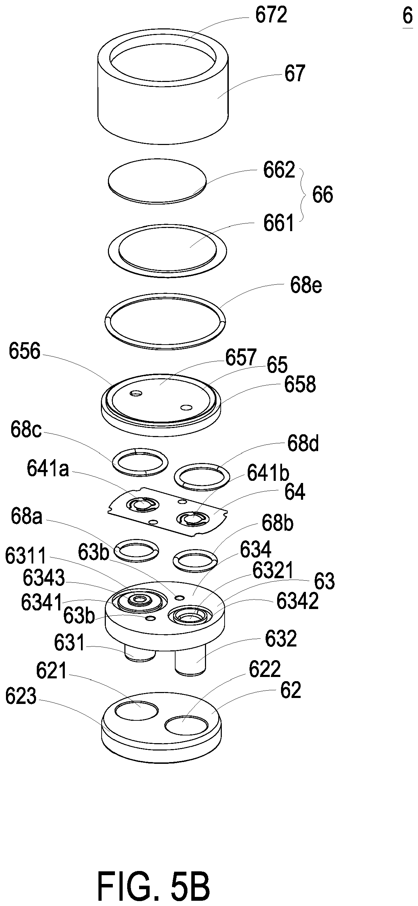

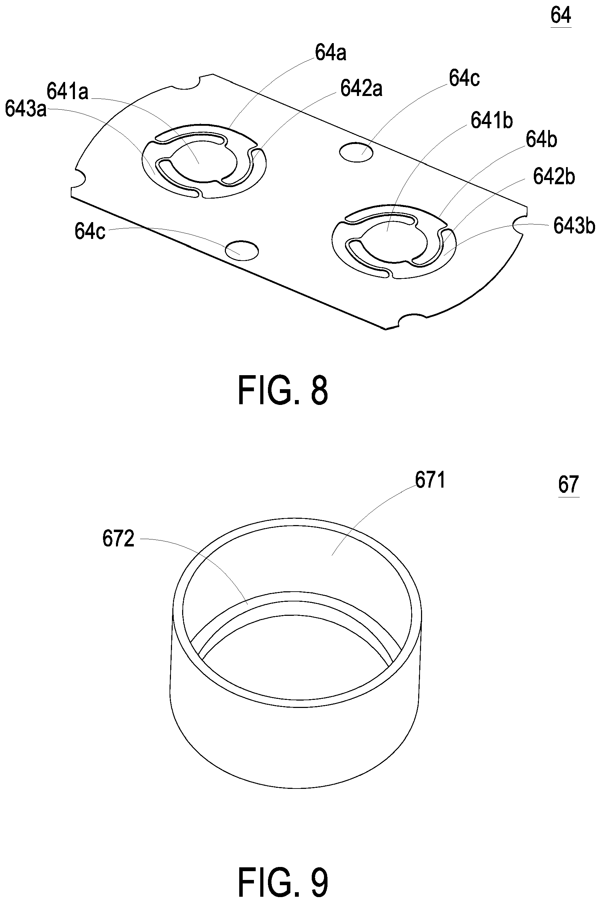

Please refer to FIGS. 5A, 5B and 8. In an embodiment, the valve membrane 64 is made of polyimide (PI), and the valve membrane 64 is produced by a reactive ion etching (RIE) process, in which a photosensitive photoresist is applied to the valve structure and the pattern of the valve structure is exposed to light, then the polyimide layer uncovered by the photoresist is etched so that the valve structure of the valve membrane 64 is formed. The valve membrane 64 is a flat thin film structure. As shown in FIG. 8, the valve membrane 64 comprises two valve plates 641a and 641b at two perforated regions 64a and 64b, respectively. The two valve plates 641a and 641b have the same thickness. The valve membrane 64 further comprises plural extension parts 642a and 642b. The extension parts 642a and 642b are arranged around the valve plates 641a and 641b for elastically supporting the valve plates 641a and 641b. The valve membrane 64 further comprises plural hollow parts 643a and 643b, each of which is formed between two adjacent extension parts 642a and 642b. When an external force is exerted on any one of the valve plates 641a and 641b, the valve plates 641a and 641b are subjected to a displacement since the valve plates 641a and 641b are elastically supported by the extension parts 642a and 642b. Consequently, a valve structure is formed. Preferably but not exclusively, the valve plates 641a and 641b have circular shapes, rectangular shapes, square shapes or arbitrary shapes. The valve membrane 64 further comprises plural positioning holes 64c. The posts 65a of the valve chamber seat 65 are penetrated through the corresponding positioning holes 64c. Consequently, the valve membrane 64 is positioned on the valve chamber seat 65. Meanwhile, the inlet valve channel 651 and the outlet valve channel 652 are respectively covered by the valve plates 641a and 641b (see FIG. 8). In this embodiment, the valve chamber seat 65 comprises two posts 65a and valve membrane 64 comprises two positioning holes 64c. It is noted that the number of the posts 65a and the number of the positioning holes 64c are not restricted.

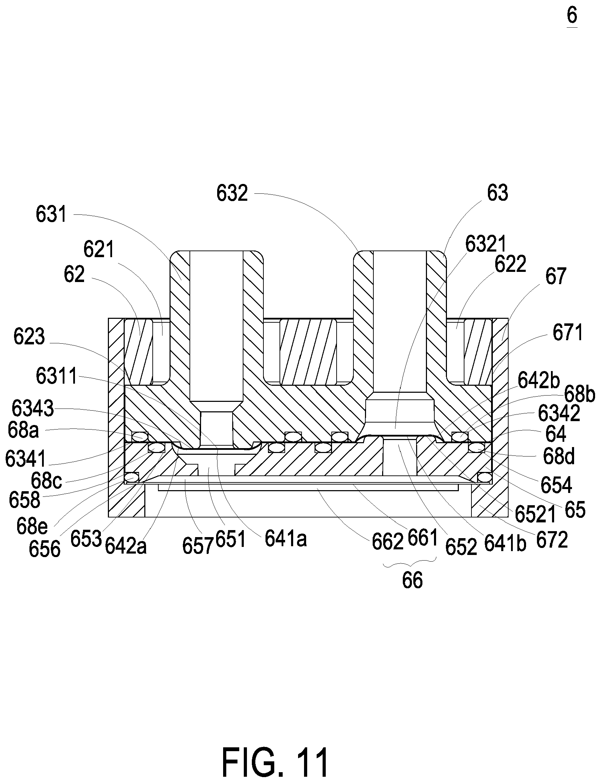

Please refer to FIG. 11. When the valve body 63 and the valve chamber seat 65 are combined together, four sealing rings 68a, 68b, 68c and 68d are received in the groove 6341 of the valve body 63, the groove 6342 of the valve body 63, the groove 653 of the valve chamber seat 65 and the groove 654 of the valve chamber seat 65, respectively. Due to the sealing rings 68a, 68b, 68c and 68d, the cigarette liquid is not leaked out after the valve body 63 and the valve chamber seat 65 are combined together. The inlet passage 631 of the valve body 63 is aligned with the inlet valve channel 651 of the valve chamber seat 65. The communication between the inlet passage 631 and the inlet valve channel 651 is selectively enabled or disabled through the valve plate 641a of the valve membrane 64. The outlet passage 632 of the valve body 63 is aligned with the outlet valve channel 652 of the valve chamber seat 65. The communication between the outlet passage 632 and the outlet valve channel 652 is selectively enabled or disabled through the valve plate 641b of the valve membrane 64. When the valve plate 641a of the valve membrane 64 is opened, the cigarette liquid is transferred from the inlet passage 631 to the pressure chamber 657 through the inlet valve channel 651. When the valve plate 641b of the valve membrane 64 is opened, the cigarette liquid is transferred from the pressure chamber 657 to the outlet passage 632 through the outlet valve channel 652. Finally, the cigarette liquid is expelled from the outlet passage 632.

Please refer to FIGS. 5A and 5B again. The actuator 66 comprises a vibration plate 661 and a piezoelectric element 662. The piezoelectric element 662 is attached on a surface of the vibration plate 661. In an embodiment, the vibration plate 661 is made of a metallic material, and the piezoelectric element 662 is made of a highly-piezoelectric material such as lead zirconate titanate (PZT) piezoelectric powder. When a voltage is applied to the piezoelectric element 662, the piezoelectric element 662 is subjected to a deformation. Consequently, the vibration plate 661 is vibrated along the vertical direction in the reciprocating manner to drive the operation of the fluid transportation device 6. In this embodiment, the vibration plate 661 of the actuator 66 is assembled with the fourth surface 656 of the valve chamber seat 65 to cover the pressure chamber 657. As mentioned above, the concave structure 658 is formed in the fourth surface 656 and arranged around the pressure chamber 657. For preventing from the fluid leakage, a sealing ring 68e is received in the concave structure 658.

As mentioned above, the valve body 63, the valve membrane 64, the valve chamber seat 65 and the actuator 66 are the main components of the fluid transportation device 6 for guiding the cigarette liquid. In accordance with the feature of the present invention, the fluid transportation device 6 has a specified mechanism for assembling and positioning these components. That is, it is not necessary to use the fastening elements (e.g., screws, nuts or bolts) to fasten these components. In an embodiment, the valve body 63, the valve membrane 64, the valve chamber seat 65 and the actuator 66 are sequentially stacked on each other and accommodated within the outer sleeve 67. Then, a valve cover 62 is tight-fitted into the outer sleeve 67. Consequently, the fluid transportation device 6 is assembled. The mechanism for assembling and positioning these components will be described as follows.

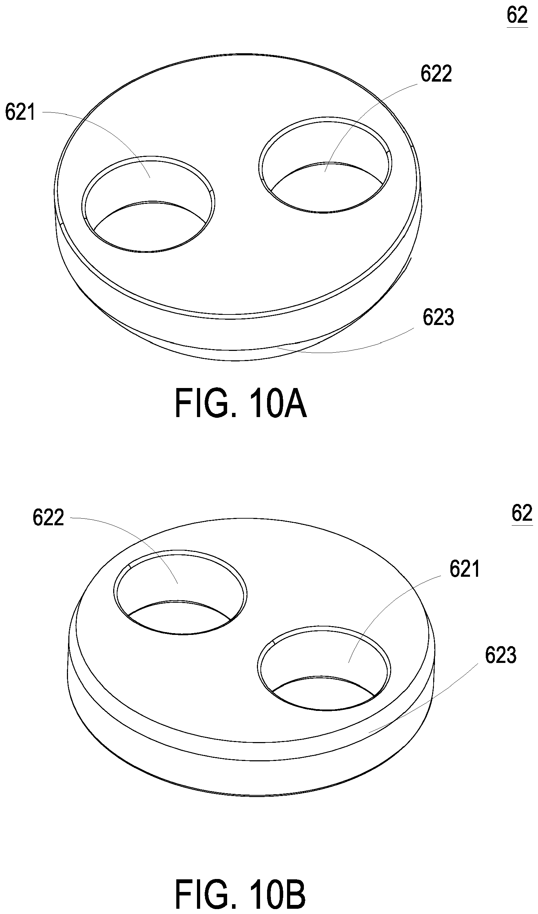

Please refer to FIGS. 5A, 5B and 9. The outer sleeve 67 is made of a metallic material. An accommodation space is defined by an inner wall 671 of the outer sleeve 67. Moreover, a ring-shaped protrusion structure 672 is formed on the lower portion of the inner wall 671 of the outer sleeve 67. Then, please refer to FIGS. 10A and 10B. The valve cover 62 is also made of a metallic material. The valve cover 62 comprises a first opening 621 and a second opening 622. The inlet passage 631 and the outlet passage 632 of the valve body 63 are penetrated through the first opening 621 and the second opening 622, respectively. Moreover, a bottom edge of the valve cover 62 has a chamfer structure 623. The outer diameter of the valve cover 62 is slightly larger than the inner diameter of the inner wall 671 of the outer sleeve 67.

Please refer to FIGS. 5A and 5B again. The valve body 63, the valve membrane 64, the valve chamber seat 65 and the actuator 66 are sequentially stacked on each other and placed into the accommodation space within the inner wall 671 of the outer sleeve 67. Meanwhile, the combination of the valve body 63, the valve membrane 64, the valve chamber seat 65 and the actuator 66 is supported by the ring-shaped protrusion structure 672 of the outer sleeve 67. As mentioned above, the outer diameter of the valve cover 62 is slightly larger than the inner diameter of the inner wall 671 of the outer sleeve 67. Due to the chamfer structure 623, the valve cover 62 is tight-fitted into the outer sleeve 67. Consequently, the combination of the valve body 63, the valve membrane 64, the valve chamber seat 65 and the actuator 66 is securely fixed between the valve cover 62 and the outer sleeve 67. Meanwhile, the fluid transportation device 6 is assembled. In this embodiment, the actuator 66 is also disposed within the accommodation space of the outer sleeve 67. When piezoelectric element 662 is subjected to a deformation in response to the applied voltage, the vibration plate 661 is vibrated along the vertical direction in the reciprocating manner. In other words, it is not necessary to use the fastening elements (e.g., screws, nuts or bolts) to fasten the components of the fluid transportation device 6.

Please refer to FIG. 11 again. The inlet valve channel 651 of the valve chamber seat 65 is aligned with the inlet opening 6311 of the valve body 63, and the inlet valve channel 651 of the valve chamber seat 65 and the inlet opening 6311 of the valve body 63 are selectively in communication with each other through the valve plate 641a of the valve membrane 64. When the inlet opening 6311 of the valve body 63 is closed by the valve plate 641a, the valve plate 641a is in close contact with the protrusion block 6343 of the valve body 63. Consequently, a pre-force is generated to result in a stronger sealing effect, and the cigarette liquid will not be returned back. Similarly, the outlet valve channel 652 of the valve chamber seat 65 is aligned with the outlet opening 6321 of the valve body 63, and the outlet valve channel 652 of the valve chamber seat 65 and the outlet opening 6321 of the valve body 63 are selectively in communication with each other through the valve plate 641b of the valve membrane 64. When the outlet valve channel 652 of the valve chamber seat 65 is closed by the valve plate 641b, the valve plate 641b is in close contact with the protrusion block 6521 of the valve chamber seat 65. Consequently, a pre-force is generated to result in a stronger sealing effect, and the cigarette liquid will not be returned back to the pressure chamber 657. Under this circumstance, in case that the fluid transportation device 6 is disabled, the cigarette liquid is not returned back to the inlet passage 631 and the outlet passage 632 of the valve body 63.

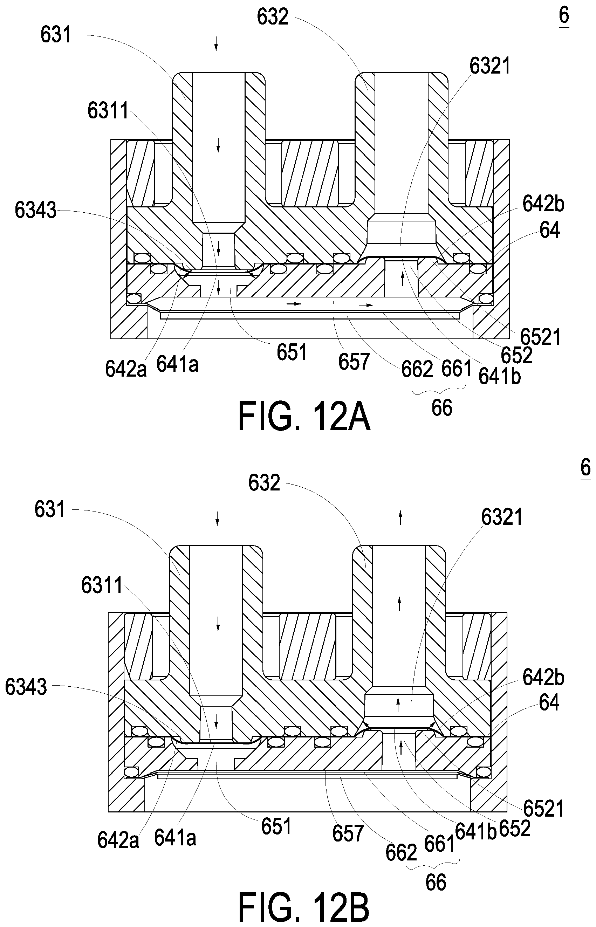

The operations of the fluid transportation device 6 will be described in more details as follows. As shown in FIG. 12A, when the piezoelectric element 662 of the actuator 66 is subjected to a deformation in response to the applied voltage and causes downwardly deformation of the vibration plate 661, the volume of the pressure chamber 657 is expanded to result in suction. In response to the suction, the valve plate 641a of the valve membrane 64 is quickly opened. Consequently, a great amount of the cigarette liquid is inhaled into the inlet passage 631 of the valve body 63, transferred to and temporarily stored in the pressure chamber 657 through the inlet opening 6311 of the valve body 63, the hollow parts 643a of the valve membrane 64 and the inlet valve channel 651 of the valve chamber seat 65. Since the suction is also exerted on the outlet valve channel 652, the valve plate 641b supported by the extension parts 642b of the valve membrane 64 is in close contact with the protrusion block 6521 of the valve chamber seat 65. Consequently, the outlet valve channel 652 of the valve chamber seat 65 is tightly closed by the valve plate 641b.

Then, as shown in FIG. 12B, once the direction of electric field applied to the piezoelectric element 662 is changed, the piezoelectric element 662 drives the vibration plate 661 to deform upwardly, and the volume of the pressure chamber 657 is shrunken. As a result, the cigarette liquid within the pressure chamber 657 is compressed, and a pushing force is applied to the inlet valve channel 651. In response to the pushing force, the valve plate 641a supported by the extension parts 642a of the valve membrane 64 is in close contact with the protrusion block 6343 of the valve body 63. Consequently, the inlet valve channel 651 of the valve chamber seat 65 is closed, and the cigarette liquid cannot be returned back to the inlet valve channel 651. Meanwhile, the pushing force is also applied to the outlet valve channel 652. In response to the pushing force, the valve plate 641b supported by the extension parts 642b of the valve membrane 64 is separated from the protrusion block 6521. Meanwhile, the outlet valve channel 652 of the valve chamber seat 65 is opened, and the cigarette liquid is transferred from the pressure chamber 657 to the external portion of the fluid transportation device 6 through the outlet valve channel 652 of the valve chamber seat 65, the hollow parts 643b of the valve membrane 64, the outlet opening 6321 of the valve body 63 and the outlet passage 632 of the valve body 63, sequentially.

The processes of FIGS. 12A and 12B are repeatedly done. Consequently, the cigarette liquid can be transferred by the fluid transportation device 6 at high efficiency without being returned back.

The fluid transportation device 6 is disposed between the sensing unit 3 and the atomizer 4. The inlet passage 631 and the input channel 6a of the fluid transportation device 6 are connected with each other. The fluid transportation device 6 is in communication with the liquid container 52 through the input channel 6a. The outlet passage 632 and the output channel 6b of the fluid transportation device 6 are connected with each other. The output channel 6b of the fluid transportation device 6 is in communication with the input port 443 of the liquid guiding seat 44 of the atomizer 4. When the fluid transportation device 6 is enabled, the cigarette liquid is transferred from the liquid container 52 to the ring-shaped liquid guiding structure 441 of the liquid guiding seat 44 through the fluid transportation device 6 and then transferred to the liquid absorption part 42 through the perforations 442. In response to the control signal from the control module 22, the fluid transportation device 6 is enabled. Since the fluid transportation device 6 is used as a switch element, the cigarette liquid is transferred from the liquid container 52 to the ring-shaped liquid guiding structure 441 of the liquid guiding seat 44 through the fluid transportation device 6 at a certain amount. Under the same pressure, the cigarette liquid is uniformly transferred to the liquid absorption part 42 through the perforations 442 to generate uniform droplets. Once the cigarette liquid absorbed by the liquid absorption part 42 reaches a saturation state, the fluid transportation device 6 is disabled. In other words, the cooperation of the fluid transportation device 6 and the atomizer 4 forms a controllable switch element in order for precisely controlling the amount of the cigarette liquid to be transferred to the liquid absorption part 42 of the atomizer 4. Consequently, the taste of the atomized vapor is enhanced, and the liquid leakage problem is solved.

Please refer to FIGS. 2A and 2C again. The mouthpiece 9 is located at an end of the second casing 1b. Moreover, the mouthpiece 9 is in communication with the passageway 51 of the liquid storage structure 5. The mouthpiece 9 comprises a filter 91 and an opening 92. The filter 91 is located at an end of the passageway 51 of the liquid storage structure 5. The cigarette liquid not atomized is stopped by the filter 91 so as to prevent from being inhaled by the user.

The operations of the electronic cigarette will be described as follows. When the user smokes and inhales the air through the opening 92 of the mouthpiece 9, the airflow flows through the electronic cigarette. At the same time, the electric circuit of the power supply device 2 is enabled. After the electric circuit of the power supply device 2 is enabled, the power supply device 2 provides electric power to the heater module 23. Consequently, the electric heater 41 is enabled to heat the cigarette liquid. Meanwhile, the cigarette liquid in the liquid absorption part 42 is heated and atomized by the electric heater 41. The cooperation of the fluid transportation device 6 and the atomizer 4 forms a controllable switch element in order for precisely controlling the amount of the cigarette liquid to be transferred to the liquid absorption part 42 of the atomizer 4 at a certain amount. Consequently, the user inhales the atomized vapor from the passageway 51 of the liquid storage structure 5 through the opening 92 of the mouthpiece 9. When the user stops smoking, the airflow does not flow through the electronic cigarette. According to the sensing result of the sensing unit 3, the electric circuit of the power supply device 2 is disabled. Meanwhile, the electric heater 41 is disabled.

From the above descriptions, the present invention provides the electronic cigarette with the fluid transportation device. The cooperation of the fluid transportation device and the atomizer forms the controllable switch element. The amount of the cigarette liquid to be transferred to the liquid absorption part of the atomizer is precisely controlled by the fluid transportation device. Consequently, the cigarette liquid could be transferred by the fluid transportation device at high efficiency without being returned back. Since the amount of the cigarette liquid is precisely controlled, the droplets are uniformly generated, the taste of the atomized vapor is enhanced, and the liquid leakage problem is solved. In other words, the electronic cigarette with the fluid transportation device is industrially valuable.

## Claims

1. An electronic cigarette, comprising:
a power supply device (2) providing a driving power and a control signal;
a sensing unit (3), wherein an electric circuit of the power supply device (2) is selectively enabled or disabled according to a result of detecting an airflow by the sensing unit (3);
an atomizer (4) comprising an electric heater (41), a liquid absorption part (42) and a liquid guiding seat (44), wherein the liquid absorption part (42) is disposed on the electric heater (41), and a combination of the liquid absorption part (42) and the electric heater (41) is disposed on a middle region of the liquid guiding seat (44), wherein the liquid guiding seat (44) comprises a ring-shaped liquid guiding structure (441), plural perforations (442) are formed in an inner side of the ring-shaped liquid guiding structure (441), the ring-shaped liquid guiding structure (441) is arranged around the liquid absorption part (42) and contacted with the liquid absorption part (42), and the ring-shaped liquid guiding structure (441) is in communication with the liquid absorption part (42) through the plural perforations (442), wherein the liquid guiding seat (44) further comprises an input port (443), and the input port (443) is in communication with the ring-shaped liquid guiding structure (441);
a liquid storage structure (5) comprising a passageway (51) and a liquid container (52), wherein the passageway (51) allows the airflow to go through, the electric heater (41) is disposed on a first end of the passageway (51), and a cigarette liquid is stored in the liquid container (52);
a fluid transportation device (6) comprising an input channel (6a) and an output channel (6b), wherein the input channel (6a) is in communication with the liquid container (52), the output channel (6b) is in communication with the input port (443) of the liquid guiding seat (44) of the atomizer (4), wherein the cigarette liquid is transferred from the liquid container (52) to the ring-shaped liquid guiding structure (441) of the liquid guiding seat (44) through the fluid transportation device (6) and transferred to the liquid absorption part (42) through the plural perforations (442), so that the cigarette liquid is transferred to the electric heater (41) of the atomizer (4) at a certain amount, wherein after the cigarette liquid is heated by the electric heater (41), an atomized vapor is generated;
a casing (1), wherein the power supply device (2), the sensing unit (3), the fluid transportation device (6), the atomizer (4), the liquid storage structure (5) and an intake-and-electric-connection element (10) are disposed within the casing (1), and the casing (1) has an entrance (1c) for the airflow to pass through, wherein after the airflow is fed into the entrance (1c), the airflow passes through the sensing unit (3) and the passageway (51) of the liquid storage structure (5) along an airflow path, wherein the fluid transportation device (6) and the electric heater (41) of the atomizer (4) are electrically connected with the power supply device (2) and the sensing unit (3) through the intake-and-electric-connection element (10) to receive the driving power and the control signal; and
a mouthpiece (9) sealing an end of the casing (1) and in communication with the passageway (51) of the liquid storage structure (5), wherein the mouthpiece (9) has an opening (92) for inhaling the atomized vapor in the passageway (51) of the liquid storage structure (5).

2. The electronic cigarette according to claim 1, wherein the casing (1) is a combination of a first casing (1a) and a second casing (1b), wherein the power supply device (2) and the sensing unit (3) are disposed within the first casing (1a), and the fluid transportation device (6), the atomizer (4) and the liquid storage structure (5) are disposed within the second casing (1b).

3. The electronic cigarette according to claim 1, wherein the power supply device (2) comprises a power module (21), a control module (22), a heater module (23) and a light emitting diode (24).

4. The electronic cigarette according to claim 3, wherein the power module (21) of the power supply device (2) is a rechargeable battery for providing the driving power to the control module (22), the heater module (23), the sensing unit (3) and the fluid transportation device (6).

5. The electronic cigarette according to claim 3, wherein the power module (21) of the power supply device (2) is a disposable battery for providing the driving power to the control module (22), the heater module (23), the sensing unit (3) and the fluid transportation device (6).

6. The electronic cigarette according to claim 3, wherein the control module (22) of the power supply device (2) is operable to transmit a first control signal to the heater module (23) and a second control signal to the fluid transportation device (6), and the control module (22) provides the driving power to the fluid transportation device (6), wherein the heater module (23) of the power supply device (2) provides electric energy to the electric heater (41) of the atomizer (4).

7. The electronic cigarette according to claim 3, wherein the light emitting diode (24) of the power supply device (2) is located at an end of the casing (1), wherein under control of the control module (22), the light emitting diode (24) provides a prompt signal to indicate an operating condition of the electronic cigarette or an intensity of the atomized vapor.

8. The electronic cigarette according to claim 1, wherein the liquid absorption part (42) is a foam structure for absorbing the cigarette liquid.

9. The electronic cigarette according to claim 1, wherein the liquid absorption part (42) is a fiber material for absorbing the cigarette liquid.

10. The electronic cigarette according to claim 1, wherein the mouthpiece (9) further comprises a filter (91) located at a second end of the passageway (51) of the liquid storage structure (5), wherein the cigarette liquid not atomized is stopped by the filter (91).

11. The electronic cigarette according to claim 1, wherein the fluid transportation device (6) comprises:
a valve cover (62) comprising a first opening (621) and a second opening (622);
a valve body (63) comprising an inlet passage (631), an outlet passage (632), a first surface (633) and a second surface (634), wherein the inlet passage (631) and the outlet passage (632) run through the first surface (633) and the second surface (634), an inlet opening (6311) is formed in the second surface (634) and in communication with the inlet passage (631), an outlet opening (6321) is formed in the second surface (634) and in communication with the outlet passage (632);
a valve membrane (64) comprising two valve plates (641a, 641b), plural extension parts (642a, 642b) and plural hollow parts (643a, 643b), wherein the two valve plates (641a, 641b) have the same thickness, the plural extension parts (642a, 642b) are arranged around the valve plates (641a, 641b) for elastically supporting the valve plates (641a, 641b), and the hollow parts (643a, 643b) are arranged between the extension parts (642a, 642b);
a valve chamber seat (65) comprising a third surface (655), a fourth surface (656), an inlet valve channel (651), an outlet valve channel (652) and a pressure chamber (657), wherein the inlet valve channel (651) and the outlet valve channel (652) run through the third surface (655) and the fourth surface (656), the two valve plates (641a, 641b) are supported on the inlet valve channel (651) and the outlet valve channel (652), the pressure chamber (657) is concavely formed in the fourth surface (656), and the pressure chamber (657) is in communication with the inlet valve channel (651) and the outlet valve channel (652);
an actuator (66), wherein the pressure chamber (657) of the valve chamber seat (65) is covered by the actuator (66); and
an outer sleeve (67), wherein an accommodation space is defined by an inner wall (671) of the outer sleeve (67), and a ring-shaped protrusion structure (672) is formed on the inner wall (671) of the outer sleeve (67),
wherein the valve body (63), the valve membrane (64), the valve chamber seat (65) and the actuator (66) are sequentially stacked on each other, accommodated within the accommodation space of the outer sleeve (67), and supported on the ring-shaped protrusion structure (672), wherein the inlet passage (631) and the outlet passage (632) of the valve body (63) are respectively penetrated through the first opening (621) and the second opening (622) of the valve cover (62), wherein while the actuator (66) is enabled, the cigarette liquid is fed into the inlet passage (631) and outputted from the outlet passage (632).

12. The electronic cigarette according to claim 11, wherein plural recesses (63b) are formed in the second surface (634) of the valve body (63), and plural posts (65a) are formed on the third surface (655) of the valve chamber seat (65), wherein the plural posts (65a) are inserted into the corresponding recesses (63b), so that the valve chamber seat (65) is fixed on the valve body (63), wherein the valve membrane (64) is arranged between the valve body (63) and the valve chamber seat (65), and the valve membrane (64) comprises plural positioning holes (64c) corresponding to the plural posts (65a), wherein the plural posts (65a) are penetrated through the corresponding positioning holes (64c), so that the valve membrane (64) is positioned and supported on the valve chamber seat (65).

13. The electronic cigarette according to claim 11, wherein a first groove (6341) is formed in the second surface (634) and arranged around the inlet opening (6311), a second groove (6342) is formed in the second surface (634) and arranged around the outlet opening (6321), a third groove (653) is formed in the third surface (655) and arranged around the inlet valve channel (651), and a fourth groove (656) is formed in the third surface (655) and arranged around the outlet valve channel (652), wherein the fluid transportation device (6) further comprises plural sealing rings (68a, 68b, 68c, 68d), and the plural sealing rings (68a, 68b, 68c, 68d) are received in the first groove (6341), the second groove (6342), the third groove (653) and the fourth groove (654), respectively.

14. The electronic cigarette according to claim 11, wherein a first protrusion block (6343) is formed on the second surface (634) of the valve body (63) and disposed on a periphery of the inlet opening (6311), and a second protrusion block (6521) is formed on the third surface (655) of the valve chamber seat (65) and disposed on a periphery of the outlet valve channel (652), wherein the first protrusion block (6343) and the second protrusion block (6521) are cooperated with the two valve plates (641a, 641b) respectively to form pre-forces for sealing and preventing the cigarette liquid from returning back.

15. The electronic cigarette according to claim 11, wherein the actuator (66) comprises a vibration plate (661) and a piezoelectric element (662), wherein the piezoelectric element (662) is attached on a surface of the vibration plate (661), the piezoelectric element (662) is subjected to a deformation in response to an applied voltage, and the vibration plate (661) of the actuator (66) is assembled with the fourth surface (656) of the valve chamber seat (65) to cover the pressure chamber (657).

## Patentansprüche

1. Elektronische Zigarette, umfassend:
eine Stromversorgungsvorrichtung (2), die eine Antriebsleistung und ein Steuersignal bereitstellt;
eine Abtasteinheit (3), wobei eine elektrische Schaltung der Stromversorgungsvorrichtung (2) selektiv aktiviert oder deaktiviert wird, entsprechend einem Ergebnis des Erfassens eines Luftstroms durch die Abtasteinheit (3);
einen Zerstäuber (4), der eine elektrische Heizung (41), einen Flüssigkeitsabsorptionsteil (42) und einen Flüssigkeitsführungssitz (44) umfasst, wobei der Flüssigkeitsabsorptionsteil (42) auf der elektrischen Heizung (41) angeordnet ist, und eine Kombination aus dem Flüssigkeitsabsorptionsteil (42) und der elektrischen Heizung (41) auf einem mittleren Bereich des Flüssigkeitsführungssitzes (44) angeordnet ist, wobei der Flüssigkeitsführungssitz (44) eine ringförmige Flüssigkeitsführungsstruktur (441) umfasst, mehrere Perforationen (442) in einer Innenseite der ringförmigen Flüssigkeitsführungsstruktur (441) ausgebildet sind, die ringförmige Flüssigkeitsführungsstruktur (441) um den Flüssigkeitsabsorptionsteil (42) herum angeordnet und mit dem Flüssigkeitsabsorptionsteil (42) in Kontakt gebracht ist, und die ringförmige Flüssigkeitsführungsstruktur (441) mit dem Flüssigkeitsabsorptionsteil (42) durch die Vielzahl von Perforationen (442) in Verbindung steht, wobei der Flüssigkeitsführungssitz (44) ferner einen Eingangsanschluss (443) umfasst, und der Eingangsanschluss (443) mit der ringförmigen Flüssigkeitsführungsstruktur (441) in Verbindung steht;
eine Flüssigkeitsspeicherstruktur (5), die einen Durchgang (51) und einen Flüssigkeitsbehälter (52) umfasst, wobei der Durchgang (51) den Luftstrom durchlässt, die elektrische Heizung (41) an einem ersten Ende des Durchgangs (51) angeordnet ist und eine Zigarettenflüssigkeit in dem Flüssigkeitsbehälter (52) gespeichert ist;
eine Flüssigkeitstransportvorrichtung (6), die einen Eingangskanal (6a) und einen Ausgangskanal (6b) umfasst, wobei der Eingangskanal (6a) mit dem Flüssigkeitsbehälter (52) in Verbindung steht, der Ausgangskanal (6b) mit dem Eingangsanschluss (443) des Flüssigkeitsführungssitzes (44) des Zerstäubers (4) in Verbindung steht, wobei die Zigarettenflüssigkeit aus dem Flüssigkeitsbehälter (52) in die ringförmige Flüssigkeitsführungsstruktur (441) des Flüssigkeitsführungssitzes (44) durch die Flüssigkeitstransportvorrichtung (6) übertragen und durch die Vielzahl von Perforationen (442) auf den Flüssigkeitsabsorptionsteil (42) übertragen wird, so dass die Zigarettenflüssigkeit in einer bestimmten Menge auf die elektrische Heizung (41) des Zerstäubers (4) übertragen wird, wobei nach dem Erhitzen der Zigarettenflüssigkeit durch die elektrische Heizung (41) ein zerstäubter Dampf erzeugt wird;
ein Gehäuse (1), wobei die Stromversorgungsvorrichtung (2), die Abtasteinheit (3), die Flüssigkeitstransportvorrichtung (6), der Zerstäuber (4), die Flüssigkeitsspeicherstruktur (5) und ein Einlass- und elektrisches Verbindungselement (10) innerhalb des Gehäuses (1) angeordnet sind und das Gehäuse (1) einen Eingang (1c) aufweist, durch den der Luftstrom hindurchströmen kann, wobei nach der Zuführung des Luftstroms in den Eingang (1c), der Luftstrom durch die Abtasteinheit (3) und den Durchgang (51) der Flüssigkeitsspeicherstruktur (5) entlang eines Luftströmungsweges strömt, wobei die Flüssigkeitstransportvorrichtung (6) und die elektrische Heizung (41) des Zerstäubers (4) elektrisch mit der Stromversorgungsvorrichtung (2) und der Abtasteinheit (3) durch das Einlass- und elektrische Verbindungselement (10) zum Empfangen der Antriebsleistung und des Steuersignals verbunden sind; und
ein Mundstück (9), das ein Ende des Gehäuses (1) abdichtet und mit dem Durchgang (51) der Flüssigkeitsspeicherstruktur (5) in Verbindung steht, wobei das Mundstück (9) eine Öffnung (92) zum Einatmen des zerstäubten Dampfes in dem Durchgang (51) der Flüssigkeitsspeicherstruktur (5) aufweist.

2. Elektronische Zigarette nach Anspruch 1, wobei das Gehäuse (1) eine Kombination aus einem ersten Gehäuse (1a) und einem zweiten Gehäuse (1b) ist, wobei die Stromversorgungsvorrichtung (2) und die Abtasteinheit (3) innerhalb des ersten Gehäuses (1a) angeordnet sind und die Flüssigkeitstransportvorrichtung (6), der Zerstäuber (4) und die Flüssigkeitsspeicherstruktur (5) innerhalb des zweiten Gehäuses (1b) angeordnet sind.

3. Elektronische Zigarette nach Anspruch 1, wobei die Stromversorgungsvorrichtung (2) ein Leistungsmodul (21), ein Steuermodul (22), ein Heizmodul (23) und eine Leuchtdiode (24) umfasst.

4. Elektronische Zigarette nach Anspruch 3, wobei das Leistungsmodul (21) der Stromversorgungsvorrichtung (2) eine wiederaufladbare Batterie zum Bereitstellen der Antriebsleistung für das Steuermodul (22), das Heizmodul (23), die Sensoreinheit (3) und die Flüssigkeitstransportvorrichtung (6) ist.

5. Elektronische Zigarette nach Anspruch 3, wobei das Leistungsmodul (21) der Stromversorgungsvorrichtung (2) eine Einwegbatterie zum Bereitstellen der Antriebsenergie für das Steuermodul (22), das Heizmodul (23), die Sensoreinheit (3) und die Flüssigkeitstransportvorrichtung (6) ist.

6. Elektronische Zigarette nach Anspruch 3, wobei das Steuermodul (22) der Stromversorgungsvorrichtung (2) betreibbar ist, um ein erstes Steuersignal an das Heizmodul (23) und ein zweites Steuersignal an die Flüssigkeitstransportvorrichtung (6) zu übertragen, und das Steuermodul (22) die Antriebsenergie an die Flüssigkeitstransportvorrichtung (6) liefert, wobei das Heizmodul (23) der Stromversorgungsvorrichtung (2) die elektrische Energie an die elektrische Heizung (41) des Zerstäubers (4) liefert.

7. Elektronische Zigarette nach Anspruch 3, wobei sich die Leuchtdiode (24) der Stromversorgungsvorrichtung (2) an einem Ende des Gehäuses (1) befindet, wobei die Leuchtdiode (24) unter Steuerung des Steuermoduls (22) ein Promptsignal zum Anzeigen eines Betriebszustandes der elektronischen Zigarette oder einer Intensität des zerstäubten Dampfes liefert.

8. Elektronische Zigarette nach Anspruch 1, wobei der Flüssigkeitsabsorptionsteil (42) eine Schaumstruktur zum Absorbieren der Zigarettenflüssigkeit ist.

9. Elektronische Zigarette nach Anspruch 1, wobei der Flüssigkeitsabsorptionsteil (42) ein Fasermaterial zum Absorbieren der Zigarettenflüssigkeit ist.

10. Elektronische Zigarette nach Anspruch 1, wobei das Mundstück (9) ferner einen Filter (91) umfasst, der an einem zweiten Ende des Durchgangs (51) der Flüssigkeitsspeicherstruktur (5) angeordnet ist, wobei die nicht zerstäubte Zigarettenflüssigkeit durch den Filter (91) gestoppt wird.

11. Elektronische Zigarette nach Anspruch 1, wobei die Flüssigkeitstransportvorrichtung (6) umfasst:
eine Ventildeckel (62) mit einer ersten Öffnung (621) und einer zweiten Öffnung (622);
einen Ventilkörper (63), der einen Einlasskanal (631), einen Auslasskanal (632), eine erste Oberfläche (633) und eine zweite Oberfläche (634) umfasst, wobei der Einlasskanal (631) und der Auslasskanal (632) durch die erste Oberfläche (633) und die zweite Oberfläche (634) verlaufen, eine Einlassöffnung (6311) in der zweiten Oberfläche (634) ausgebildet ist und in Verbindung mit dem Einlasskanal (631) eine Auslassöffnung (6321) in der zweiten Oberfläche (634) und in Verbindung mit dem Auslasskanal (632) ausgebildet ist;
eine Ventilmembran (64), die zwei Ventilplatten (641a, 641b), mehrere Verlängerungsteile (642a, 642b) und mehrere Hohlteile (643a, 643b) umfasst, wobei die beiden Ventilplatten (641a, 641b) die gleiche Dicke aufweisen, die mehreren Verlängerungsteile (642a, 642b) um die Ventilplatten (641a, 641b) herum angeordnet sind, um die Ventilplatten (641a, 641b) elastisch zu stützen, und die Hohlteile (643a, 643b) zwischen den Verlängerungsteilen (642a, 642b) angeordnet sind;
einen Ventilkammersitz (65), der eine dritte Oberfläche (655), eine vierte Oberfläche (656), einen Einlassventilkanal (651), einen Auslassventilkanal (652) und eine Druckkammer (657) umfasst, wobei der Einlassventilkanal (651) und der Auslassventilkanal (652) durch die dritte Oberfläche (655) und die vierte Oberfläche (656) verlaufen, die beiden Ventilplatten (641a, 641b) an dem Einlassventilkanal (651) und dem Auslassventilkanal (652) abgestützt sind, die Druckkammer (657) in der vierten Fläche (656) konkav ausgebildet ist und die Druckkammer (657) mit dem Einlassventilkanal (651) und dem Auslassventilkanal (652) in Verbindung steht;
ein Stellglied (66), wobei die Druckkammer (657) des Ventilkammersitzes (65) durch das Stellglied (66) abgedeckt ist; und
eine Außenhülse (67), wobei ein Aufnahmebereich durch eine Innenwand (671) der Außenhülse (67) definiert ist und eine ringförmige Vorsprungsstruktur (672) an der Innenwand (671) der Außenhülse (67) ausgebildet ist,
wobei der Ventilkörper (63), die Ventilmembran (64), der Ventilkammersitz (65) und das Stellglied (66) nacheinander aufeinander gestapelt im Aufnahmebereich der Außenhülse (67) untergebracht und an der ringförmigen Vorstehstruktur (672) abgestützt sind, wobei der Einlasskanal (631) und der Auslasskanal (632) des Ventilkörpers (63) jeweils durch die erste Öffnung (621) und die zweite Öffnung (622) des Ventildeckels (62) durchdrungen sind, wobei bei aktiviertem Stellglied (66) die Zigarettenflüssigkeit in den Einlasskanal (631) eingeleitet und aus dem Auslasskanal (632) abgegeben wird.

12. Elektronische Zigarette nach Anspruch 11, wobei in der zweiten Oberfläche (634) des Ventilkörpers (63) mehrere Aussparungen (63b) ausgebildet sind und auf der dritten Oberfläche (655) des Ventilkammersitzes (65) mehrere Pfosten (65a) ausgebildet sind, wobei die mehreren Pfosten (65a) in die entsprechenden Aussparungen (63b) eingesetzt sind, so dass der Ventilkammersitz (65) am Ventilkörper (63) befestigt ist, wobei die Ventilmembran (64) zwischen dem Ventilkörper (63) und dem Ventilkammersitz (65) angeordnet ist und die Ventilmembran (64) mehrere Positionierungslöcher (64c) entsprechend den mehreren Pfosten (65a) aufweist, wobei die mehreren Pfosten (65a) durch die entsprechenden Positionierungslöcher (64c) hindurchgeführt sind, so dass die Ventilmembran (64) auf dem Ventilkammersitz (65) positioniert und abgestützt ist.

13. Elektronische Zigarette nach Anspruch 11, wobei eine erste Nut (6341) in der zweiten Oberfläche (634) ausgebildet und um die Einlassöffnung (6311) herum angeordnet ist, eine zweite Nut (6342) in der zweiten Oberfläche (634) ausgebildet und um die Auslassöffnung (6321) angeordnet ist, eine dritte Nut (653) in der dritten Oberfläche (655) ausgebildet und um den Einlassventilkanal (651) angeordnet ist, und eine vierte Nut (656) in der dritten Oberfläche (655) ausgebildet und um den Auslassventilkanal (652) angeordnet ist, wobei die Fluidtransportvorrichtung (6) ferner mehrere Dichtungsringe (68a, 68b, 68c, 68d) umfasst, und die mehreren Dichtungsringe (68a, 68b, 68c, 68d) in der ersten Nut (6341), der zweiten Nut (6342), der dritten Nut (653) und der vierten Nut (654) aufgenommen sind.

14. Elektronische Zigarette nach Anspruch 11, wobei ein erster Vorsprungsblock (6343) auf der zweiten Oberfläche (634) des Ventilkörpers (63) ausgebildet und auf einem Umfang der Einlassöffnung (6311) angeordnet ist, und ein zweiter Vorsprungsblock (6521) auf der dritten Oberfläche (655) des Ventilkammersitzes (65) ausgebildet und auf einem Umfang des Auslassventilkanals (652) angeordnet ist, wobei der erste Vorsprungblock (6343) und der zweite Vorsprungblock (6521) mit den beiden Ventilplatten (641a, 641b) zusammenwirken, um Vorkräfte zum Abdichten und Verhindern der Rückführung der Zigarettenflüssigkeit zu bilden.

15. Elektronische Zigarette nach Anspruch 11, wobei das Stellglied (66) eine Vibrationsplatte (661) und ein piezoelektrisches Element (662) umfasst, wobei das piezoelektrische Element (662) auf einer Oberfläche der Vibrationsplatte (661) befestigt ist, das piezoelektrische Element (662) als Reaktion auf eine angelegte Spannung einer Verformung unterworfen wird und die Vibrationsplatte (661) des Stellglieds (66) mit der vierten Oberfläche (656) des Ventilkammersitzes (65) zur Abdeckung der Druckkammer (657) montiert ist.

## Revendications

1. Cigarette électronique, comprenant :
un dispositif d'alimentation électrique (2) fournissant une puissance d'excitation et un signal de commande ;
une unité de détection (3), dans laquelle un circuit électrique du dispositif d'alimentation électrique (2) est sélectivement activé ou désactivé en fonction d'un résultat de la détection d'un écoulement d'air par l'unité de détection (3) ;
un atomiseur (4) comprenant un élément chauffant électrique (41), une partie d'absorption de liquide (42) et un siège de guidage de liquide (44), dans laquelle la partie d'absorption de liquide (42) est disposée sur l'élément chauffant électrique (41), et une combinaison de la partie d'absorption de liquide (42) et de l'élément chauffant électrique (41) est disposée sur une région médiane du siège de guidage de liquide (44), dans laquelle le siège de guidage de liquide (44) comprend une structure de guidage de liquide (441) en forme de bague, de multiples perforations (442) sont formées dans un côté interne de la structure de guidage de liquide (441) en forme de bague, la structure de guidage de liquide (441) en forme de bague est agencée autour de la partie d'absorption de liquide (42) et en contact avec la partie d'absorption de liquide (42), et la structure de guidage de liquide (441) en forme de bague est en communication avec la partie d'absorption de liquide (42) à travers les multiples perforations (442), dans laquelle le siège de guidage de liquide (44) comprend en outre un orifice d'entrée (443), et l'orifice d'entrée (443) est en communication avec la structure de guidage de liquide (441) en forme de bague ;
une structure de stockage de liquide (5) comprenant un conduit (51) et un réservoir de liquide (52), dans laquelle le conduit (51) permet à l'écoulement d'air de le traverser, l'élément chauffant électrique (41) est disposé sur une première extrémité du conduit (51), et un liquide pour cigarette est stocké dans le réservoir de liquide (52) ;
un dispositif de transport de fluide (6) comprenant un canal d'entrée (6a) et un canal de sortie (6b), dans laquelle le canal d'entrée (6a) est en communication avec le réservoir de liquide (52), le canal de sortie (6b) est en communication avec l'orifice d'entrée (443) du siège de guidage de liquide (44) de l'atomiseur (4), dans laquelle le liquide pour cigarette est transféré du réservoir de liquide (52) à la structure de guidage de liquide (441) en forme de bague du siège de guidage de liquide (44) à travers le dispositif de transport de fluide (6) et transféré à la partie d'absorption de liquide (42) à travers les multiples perforations (442), de sorte que le liquide pour cigarette est transféré à l'élément chauffant électrique (41) de l'atomiseur (4) à une certaine quantité, dans laquelle après que le liquide de cigarette est chauffé par l'élément chauffant électrique (41), une vapeur atomisée est générée ;
un boîtier (1), dans laquelle le dispositif d'alimentation électrique (2), l'unité de détection (3), le dispositif de transport de fluide (6), l'atomiseur (4), la structure de stockage de liquide (5) et un élément d'admission et de connexion électrique (10) sont disposés à l'intérieur du boîtier (1), et le boîtier (1) possède une entrée (1c) pour que l'écoulement d'air la traverse, dans laquelle après que l'écoulement d'air est alimenté dans l'entrée (1c), l'écoulement d'air traverse l'unité de détection (3) et le conduit (51) de la structure de stockage de liquide (5) le long d'un trajet d'écoulement d'air, dans laquelle le dispositif de transport de fluide (6) et l'élément chauffant électrique (41) de l'atomiseur (4) sont électriquement connectés avec le dispositif d'alimentation électrique (2) et l'unité de détection (3) à travers l'élément d'admission et de connexion électrique (10) pour recevoir la puissance d'excitation et le signal de commande ; et
une pièce buccale (9) rendant étanche une extrémité du boîtier (1) et en communication avec le conduit (51) de la structure de stockage de liquide (5), dans laquelle la pièce buccale (9) possède une ouverture (92) pour inhaler la vapeur atomisée dans le conduit (51) de la structure de stockage de liquide (5).

2. Cigarette électronique selon la revendication 1, dans laquelle le boîtier (1) est une combinaison d'un premier boîtier (1a) et d'un second boîtier (1b), dans laquelle le dispositif d'alimentation électrique (2) et l'unité de détection (3) sont disposés à l'intérieur du premier boîtier (1a), et le dispositif de transport de fluide (6), l'atomiseur (4) et la structure de stockage de liquide (5) sont disposés à l'intérieur du second boîtier (1b).

3. Cigarette électronique selon la revendication 1, dans laquelle le dispositif d'alimentation électrique (2) comprend un module d'alimentation (21), un module de commande (22), un module d'élément chauffant (23) et une diode électroluminescente (24).

4. Cigarette électronique selon la revendication 3, dans laquelle le module d'alimentation (21) du dispositif d'alimentation électrique (2) est une batterie rechargeable pour fournir la puissance d'excitation au module de commande (22), au module d'élément chauffant (23), à l'unité de détection (3) et au dispositif de transport de fluide (6).

5. Cigarette électronique selon la revendication 3, dans laquelle le module d'alimentation (21) du dispositif d'alimentation électrique (2) est une batterie jetable pour fournir la puissance d'excitation au module de commande (22), au module d'élément chauffant (23), à l'unité de détection (3) et au dispositif de transport de fluide (6).

6. Cigarette électronique selon la revendication 3, dans laquelle le module de commande (22) du dispositif d'alimentation électrique (2) est utilisable pour transmettre un premier signal de commande au module d'élément chauffant (23) et un second signal de commande au dispositif de transport de fluide (6), et le module de commande (22) fournit la puissance d'excitation au dispositif de transport de fluide (6), dans laquelle le module d'élément chauffant (23) du dispositif d'alimentation électrique (2) fournit de l'énergie électrique à l'élément chauffant électrique (41) de l'atomiseur (4).

7. Cigarette électronique selon la revendication 3, dans laquelle la diode électroluminescente (24) du dispositif d'alimentation électrique (2) est située à une extrémité du boîtier (1), dans laquelle sous la commande du module de commande (22), la diode électroluminescente (24) fournit un signal d'invite pour indiquer un état de fonctionnement de la cigarette électronique ou une intensité de la vapeur atomisée.

8. Cigarette électronique selon la revendication 1, dans laquelle la partie d'absorption de liquide (42) est une structure alvéolaire pour absorber le liquide pour cigarette.

9. Cigarette électronique selon la revendication 1, dans laquelle la partie d'absorption de liquide (42) est un matériau fibreux pour absorber le liquide pour cigarette.

10. Cigarette électronique selon la revendication 1, dans laquelle la pièce buccale (9) comprend en outre un filtre (91) situé à une seconde extrémité du conduit (51) de la structure de stockage de liquide (5), dans laquelle le liquide pour cigarette non atomisé est arrêté par le filtre (91).

11. Cigarette électronique selon la revendication 1, dans laquelle le dispositif de transport de fluide (6) comprend :
un couvercle de clapet (62) comprenant une première ouverture (621) et une seconde ouverture (622) ;
un corps de clapet (63) comprenant un passage d'entrée (631), un passage de sortie (632), une première surface (633) et une deuxième surface (634), dans laquelle le passage d'entrée (631) et le passage de sortie (632) traversent la première surface (633) et la deuxième surface (634), une ouverture d'entrée (6311) est formée dans la deuxième surface (634) et en communication avec le passage d'entrée (631), une ouverture de sortie (6321) est formée dans la deuxième surface (634) et en communication avec le passage de sortie (632) ;
une membrane de clapet (64) comprenant deux plaques de clapet (641a, 641b), de multiples parties d'extension (642a, 642b) et de multiples parties creuses (643a, 643b), dans laquelle les deux plaques de clapet (641a, 641b) ont la même épaisseur, les multiples parties d'extension (642a, 642b) sont agencées autour des plaques de clapet (641a, 641b) pour porter élastiquement les plaques de clapet (641a, 641b), et les parties creuses (643a, 643b) sont agencées entre les parties d'extension (642a, 642b) ;
un siège de chambre de clapet (65) comprenant une troisième surface (655), une quatrième surface (656), un canal de clapet d'entrée (651), un canal de clapet de sortie (652) et une chambre de pression (657), dans laquelle le canal de clapet d'entrée (651) et le canal de clapet de sortie (652) traversent la troisième surface (655) et la quatrième surface (656), les deux plaques de clapet (641a, 641b) sont portées sur le canal de clapet d'entrée (651) et le canal de clapet de sortie (652), la chambre de pression (657) est formée de manière concave dans la quatrième surface (656) et la chambre de pression (657) est en communication avec le canal de clapet d'entrée (651) et le canal de clapet de sortie (652) ;
un actionneur (66), dans laquelle la chambre de pression (657) du siège de chambre de clapet (65) est recouverte par l'actionneur (66) ; et
un manchon externe (67), dans laquelle un espace de logement est défini par une paroi interne (671) du manchon externe (67), et une structure en saillie (672) en forme de bague est formée sur la paroi interne (671) du manchon externe (67),
dans laquelle le corps de clapet (63), la membrane de clapet (64), le siège de chambre de clapet (65) et l'actionneur (66) sont empilés en séquence les uns sur les autres, logés à l'intérieur de l'espace de logement du manchon externe (67) et portés sur la structure en saillie (672) en forme de bague, dans laquelle le passage d'entrée (631) et le passage de sortie (632) du corps de clapet (63) pénètrent respectivement à travers la première ouverture (621) et la seconde ouverture (622) du couvercle de clapet (62), dans laquelle, tandis que l'actionneur (66) est activé, le liquide pour cigarette est alimenté dans le passage d'entrée (631) et délivré en sortie du passage de sortie (632).

12. Cigarette électronique selon la revendication 11, dans laquelle de multiples évidements (63b) sont formés dans la deuxième surface (634) du corps de clapet (63) et de multiples montants (65a) sont formés sur la troisième surface (655) du siège de chambre de clapet (65), dans laquelle les multiples montants (65a) sont insérés dans les évidements correspondants (63b), de sorte que le siège de chambre de clapet (65) est fixé sur le corps de clapet (63), dans laquelle la membrane de clapet (64) est agencée entre le corps de clapet (63) et le siège de chambre de clapet (65), et la membrane de clapet (64) comprend de multiples trous de positionnement (64c) correspondant aux multiples montants (65a), dans laquelle les multiples montants (65a) pénètrent à travers les trous de positionnement correspondants (64c), de sorte que la membrane de clapet (64) est positionnée et portée sur le siège de chambre de clapet (65).

13. Cigarette électronique selon la revendication 11, dans laquelle une première gorge (6341) est formée dans la deuxième surface (634) et agencée autour de l'ouverture d'entrée (6311), une deuxième gorge (6342) est formée dans la deuxième surface (634) et agencée autour de l'ouverture de sortie (6321), une troisième gorge (653) est formée dans la troisième surface (655) et agencée autour du canal de clapet d'entrée (651), et une quatrième gorge (656) est formée dans la troisième surface (655) et agencée autour du canal de clapet de sortie (652), dans laquelle le dispositif de transport de fluide (6) comprend en outre de multiples bagues d'étanchéité (68a, 68b, 68c, 68d) et les multiples bagues d'étanchéité (68a, 68b, 68c, 68d) sont reçues dans la première gorge (6341), la deuxième gorge (6342), la troisième gorge (653) et la quatrième gorge (654), respectivement.

14. Cigarette électronique selon la revendication 11, dans laquelle un premier bloc en saillie (6343) est formé sur la deuxième surface (634) du corps de clapet (63) et disposé sur une périphérie de l'ouverture d'entrée (6311), et un second bloc en saillie (6521) est formé sur la troisième surface (655) du siège de chambre de clapet (65) et disposé sur une périphérie du canal de clapet de sortie (652), dans laquelle le premier bloc en saille (6343) et le second bloc en saille (6521) coopèrent avec les deux plaques de clapet (641a, 641b) respectivement pour former des précontraintes pour rendre étanche et empêcher le retour du liquide pour cigarette.

15. Cigarette électronique selon la revendication 11, dans laquelle l'actionneur (66) comprend une plaque de vibration (661) et un élément piézoélectrique (662), dans laquelle l'élément piézoélectrique (662) est fixé sur une surface de la plaque de vibration (661), l'élément piézoélectrique (662) est soumis à une déformation en réponse à une tension appliquée, et la plaque de vibration (661) de l'actionneur (66) est assemblée avec la quatrième surface (656) du siège de chambre de clapet (65) pour recouvrir la chambre de pression (657).
